# EUROPÄISCHE PATENTSCHRIFT

(11) **EP 0 491 261 B1**
(45) Veröffentlichungstag und Bekanntmachung des Hinweises auf die Patenterteilung: **19.07.1995**
(21) Anmeldenummer: 91121124.1
(22) Anmeldetag: 10.12.1991
(51) Int. Cl.: B60H 1/00

(54) **Heiz- und/oder Klimaanlage für den Innenraum von Kraftfahrzeugen**
Heating and/or air conditioning device for a motor vehicle interior
Installation de chauffage et/ou de climatisation pour l'habitacle de véhicules à moteur

(30) Priorität: 18.12.1990 DE 4040461; 19.01.1991 DE 4101548; 26.10.1991 DE 4135349
(43) Veröffentlichungstag der Anmeldung: 24.06.1992
(73) Patentinhaber: Iveco Magirus Aktiengesellschaft, D-89017 Ulm (DE)
(72) Erfinder: Bartsch, Erhard, W-7916 Nersingen (DE); Görtler, Thomas, W-7912 Weissenhorn (DE)
(74) Vertreter: TER MEER STEINMEISTER & PARTNER GbR

(56) Entgegenhaltungen:
- EP-A- 0 102 611
- DE-A- 3 714 771
- DE-U- 6 929 387
- FR-A- 1 398 105
- FR-A- 2 608 520
- US-A- 4 223 754

## Beschreibung

Die Erfindung betrifft eine Heiz- und/oder Klimaanlage für den Innenraum von Kraftfahrzeugen, insbesondere für ein Nutzfahrzeug-Fahrerhaus, gemäß dem Oberbegriff des Anspruchs 1.

Eine Anlage dieser Art ist aus der EP-A-0 102 611 bekannt. Die bekannte Anlage weist zum eine Bypass-Klappe zur Umgehung eines Wärmetauschers auf. Andererseits geht von einem waagerechten Kanal eines Luftausströmers eine senkrechte Zweigleitung aus, die durch eine gesonderte Klappe geöffnet und geschlossen werden kann. Die in der Druckschrift beschriebene Lösung zielt darauf ab, die Misch- und Sperrfunktion, daß heißt die Temperaturregelung und die Luftmengenregelung zu entkoppeln. Dies soll mit geringem konstruktiven Aufwand auf strömungstechnisch günstige Weise erreicht werden.

Zur Herstellung von behaglichen Innenraumtemperaturen in Fahrerhäusern/Fahrgastzellen wird nach heutigem Stand der Technik über kombinierte Heiz- und Klimageräte temperierte Luft in die Fahrgastzelle über verschiedene Luftverteilersysteme und -ausströmer eingeblasen.

Im allgemeinen wird die ausgeblasene Luft wie folgt in der Fahrgastzelle verteilt:
- vertikal nach oben bzw. zur Scheibe (Defrost-Ausströmer für Front- und Seitenscheiben).
- horizontal nach hinten (Zentral- und Seitendüsen)
- vertikal nach unten (Fußraum-Ausströmer)
Diese Luftverteilung sowie die Regelung der ausgeblasenen Luft kann manuell oder automatisch bis auf Zentral- und Seitendüsen (über Elektronik und Stellmotoren) erfolgen.

Bei elektronisch geregelten kombinierten Heizungs-/Klimaanlagen unterscheidet man drei Betriebszustände:
- Heizbetrieb, insbesondere beim Start und/oder tiefen Außentemperaturen wird die austretende Warmluft vorwiegend nach unten in den Fußraum verteilt (bei Defroster-Betrieb zur Scheibe).
- Reheat-Betrieb (Heiz- und Klimabetrieb kombiniert), insbesondere bei einer Fahrt bei mäßigen Außentemperaturen (z. B. in Bereich von 5° c bis 25° C Außentemperatur), wird die Warmluft vertikal nach unten und kombinierte Warm- und Kaltluft horizontal nach hingen bzw. vertikal nach oben (Kaltluft) verteilt.
- Klimabetrieb, insbesondere bei höheren Außentemperaturen wird die austretende Kaltluft vorwiegend vertikal nach oben bzw. horizontal nach hinten verteilt.

Eine während der Fahrt auftretende höhere Sonneneinstrahlung, welche zu einer Erhöhung der Kopftemperatur im Fahrerhaus führen würde, wird im allgemeinen durch horizontal nach hinten austretende kältere Luft mehr oder weniger kompensiert.

Von Nachteil ist, daß die aus den Zentraldüsen austretende Kaltluft bei einem Klima- und einem Reheat-Betrieb grundsätzlich unangenehme Zugerscheinungen für die Fahrzeuginsassen hervorruft, insbesondere bei ungünstiger Düsenanordnung. Ferner kann die Luftschichtung im Fahrerhaus (kühler Kopfbereich,warmer Fußbereich) vor allem bei starker Sonneneinstrahlung nicht optimal oder überhaupt nicht beeinflußt werden. Ein Ausblasen von Kaltluft (z. B. bei einem Klimabetrieb durch Sonneneinfluß) über die vertikal nach oben zur Scheibe hin gerichteten Defroster-Düsen ist nur bedingt möglich, da es dort, hervorgerufen durch die teilweise sehr niedrigen Ausblastemperaturen, zu Vereisungserscheinungen innen an der Windschutzscheibe kommen kann. Die Zentralausströmer müssen von Hand mehr oder weniger geöffnet bzw. geschlossen werden. Nur beispielhaft wird zum Stand der Techik auf die Heizanlage gemäß DE-A-31 12 684 EP-A-0 210 548, EP-A-0 102 611 die bereits genannt wurde, und DE-U-69 29 387 verwiesen.

Aufgabe der Erfindung ist die Schaffung einer Heiz- und/oder Klimaanlage der eingangs genannten Art, welche bei einfachem Aufbau eine verbesserte Luftschichtung im Fahrerhaus mit kälterem Kopfbereich und wärmerem Fußbereich unter weitgehender Vermeidung von Zugerscheinungen ermöglicht.

Gelöst wird die der Erfindung zugrundeliegende Aufgabe durch die im kennzeichnenden Teil der Ansprüche 1.

Vorteilhaft weitergebildet wird der Erfindungsgegenstand durch die Merkmale der Unteransprüche.

Wesen der Erfindung ist, zumindest in einem der im wesentlichen horizontalen Luftausströmer zumindest mit einer im wesentlichen nach oben gerichteten Abzweigleitung zu versehen, welche eine Zusatzklappe enthält, die zwischen einer die Abzweigleitung im wesentlichen versperrenden und im wesentlichen vollständig freigebenden Stellung selbsttätig verstellbar, insbesondere verschwenkbar ist.

Am oberen Ende der Abzweigleitung sind sogenannte Vertikalausströmdüsen bzw. Topdüsen angeordnet, die vorzugsweise zusätzlich zu den in der Nähe der Windschutzscheibe gelegenen sogenannten Defrosterdüsen vorgesehen sind.

Die selbsttätigen Verstellmittel können Stellvorrichtungen wie z.B. Mikromotoren sein, die elektronisch insbesondere in Abhängigkeit der kalkulierten oder gemessenen Ausströmtemperatur der Luft gesteuert sind.

Die Zusatzklappen der Topdüsen bzw. die Schwenkklappe der Zentraldüse können auch durch eine mechanische Kopplungseinrichtung mit der Bypaß-Klappe des Wärmetauschers verbunden sein. Dadurch wird ein automatisches Öffnen und Schließen der zugeordneten Ausströmer erreicht. Eine Verstellung von Hand ist mithin entbehrlich.

Über die Bypaß-Klappe wird der Anteil der Kaltluft speziell auf eine Zentraldüsen-Einheit bzw. einen Mischraum der Heiz-/Klimaanlage gelenkt, welcher den einzelnen Ausströmern in Luftströmungsrichtung vorgeordnet ist. Der Kaltluftanteil steigt beispielsweise proportional zu dem Öffnungswinkel der Bypaß-Klappe an. Öffnen und Schließen der Bypaß-Klappe kann manuell oder automatisch erfolgen. Bei automatischer Temperaturregelung wird die Bypaß-Klappe und somit auch die Zusatzklappe bzw. die Schwenkklappe zusätzlich vorzugsweise durch einen Sonnensensor beeinflußt.

Die Bypaß-Klappe ist mechanisch oder elektrisch mit einer Zusatzklappe dergestalt gekoppelt, daß letztere einen entsprechenden Luftauslaßkanal für die sogenannten Topdüsen beispielsweise proportional zum Öffnungswinkel der Bypaß-Klappe freigibt.

Durch die Erfindung wird eine Verringerung bzw. eine Eliminierung von Zugerscheinungen im Innenraum eines Fahrzeugs, insbesondere im Fahrerhaus eines Nutzfahrzeuges erreicht, und zwar besonders bei einem Reheat- und Klimabetrieb. Von Vorteil ist die bessere Luftschichtung im Fahrerhaus (kälterer Kopfbereich, wärmerer Fußbereich) im Vergleich zu bekannten Anlagen und somit eine behaglichere Innenraumtemperatur. Es ergibt sich eine von der Stellung bzw. vom Öffnungsquerschnitt der manuell einzustellenden Zentraldüsen unabhängige optimale automatisch geregelte Luftverteilung im Fahrerhaus. Sind Sonnensensoren vorgesehen, ergibt sich in besonders vorteilhafter Weise ein automatischer Angleich der "Schichtanhebung" im Kopfbereich durch Sonneneinstrahlung. Von Vorteil ist ferner die Einrichtung einer unabhängigen und somit in der Funktion nicht außer Kraft zu setzenden Heiz-/Klimaanlage bei manuell einzustellenden Luftverteilern, z. B. Zentraldüsen. Vorteilhaft ist bei z. B. drei eingebauten Zentraldüsen die mittige Anordnung der automatischen Zentraldüse, um den Fahrerhausinsassen zur automatischen Luftverteilung zusätzlich eine individuelle Einstellung der Luftverteilung zu ermöglichen. Vorteilhaft ist besonders durch die Automatisierung der Top- bzw. automatische Zentraldüse, daß ein Außerkraftsetzen der Heiz-/Klimaanlage (insbesondere im Klimabetrieb) infolge manueller Fehlbedienung yermieden wird.

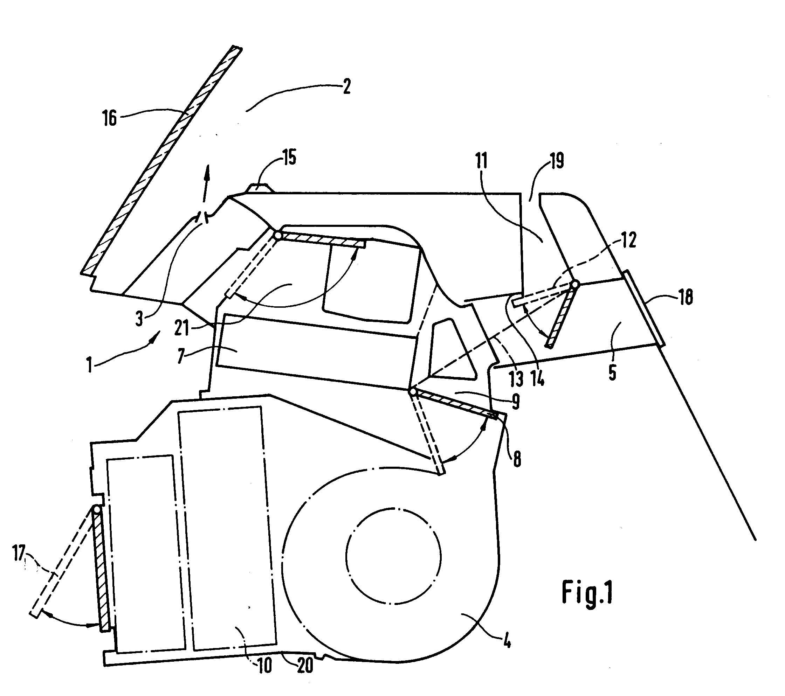

Die Erfindung wird nachfolgend anhand eines Ausführungsbeispiels unter Bezugnahme auf die beigefügte Zeichnung näher erläutert; diese zeigt:
einen schematischen Vertikalschnitt einer Heiz-/Klimaanlage im Innenraum eines Nutzfahrzeug-Fahrerhauses unterhalb der Windschutzscheibe, und
Die Heiz-/Klimaanlage (1) im Innenraum (2) eines Nutzfahrzeug-Fahrerhauses unterhalb der Windschutzscheibe (16) enthält die üblichen Hauptbauteile, ein mehrteiliges Gehäuse (20), ein Luftgebläse (4), einen dem Luftgebläse (4) vorgeordneten Verdampfer (10) sowie eine Eingangsklappe (17).

Dem Luftgebläse (4) in Strömungsrichtung nachgeordnet ist ein Wärmetauscher (7), welcher zu einem zentralen Mischraum (21) führt. Parallel zum Wärmetauscher (7) ist ein Bypaßkanal (9) angeordnet, welcher vom Luftgebläse (4) einen direkten Zugang zum zentralen Mischraum (21) schafft, wobei die Eingangsseite des Bypaßkanals (9) durch eine Bypaßklappe (8) vollständig geöffnet oder geschlossen werden kann. Die Bypaßklappe (8) ist eine sog. Flügelklappe und im Bereich des Wärmetauschers (7) beweglich aufgehängt.
Der zentrale Mischraum (21) steht in einer Leitungsverbindung mit im wesentlichen vertikal verlaufenden Ausströmern (3), welche nach oben in Richtung Windschutzscheibe (16) verlaufen (Defroster-Düsen). Im wesentlichen vertikal verlaufende Ausströmer können auch für den (nicht veranschaulichten) Fußraum des Nutzfahrzeug-Fahrerhauses vorgesehen sein.

Dem zentralen Mischraum (21) nachgeordnet ist ferner ein im wesentlichen horizontal verlaufender Ausströmer (5), welcher in etwa fahrzeugmittig im Bereich des Armaturenbretts angeordnet ist und eine Luftausströmung horizontal nach hinten in das Fahrerhaus über Zentraldüsen (18) ermöglicht. Die Zentraldüsen (18) weisen einen Verstell-/Schließmechanismus auf, welcher von Hand betätigt werden kann.

An den im wesentlichen horizontalen Ausströmer (5) ist oberseitig eine im wesentlichen vertikal nach oben gerichtete Abzweigleitung (11) angeschlossen, welche am oberen Ende im Bereich des Armaturenbretts Vertikalausströmer- oder Topdüsen (19) aufweist. Am Eingang der Abzweigleitung (11) ist eine als Flügelklappe ausgebildete Zusatzklappe (12) angelenkt, welche ein vollständiges Öffnen und Schließen der Abzweigleitung ermöglicht.

Zusatzklappe (12) und Bypaßklappe (8) sind durch eine Kopplungseinrichtung in Form einer Koppel (13) und Hebel (14) mechanisch verbunden in einer Weise, daß bei geschlossener Bypaßklappe (8) gemäß ausgezogener Linie der Zeichnung, d.h. bei geschlossenem Bypaßkanal (9), die Zusatzklappe (12) gemäß ausgezogener Linie der Zeichnung, d.h. die Abzweigleitung (11), ebenfalls vollständig geschlossen ist. Die Gelenkstellen und Hebellängen der mechanischen Kopplungseinrichtung sind so getroffen, daß bei vollständiger Öffnung der Bypaßklappe (8) die Zusatzklappe (12) ebenfalls im wesentlichen vollständig geöffnet ist. Der Öffnungswinkel der Zusatzklappe (12) folgt somit proportional dem Öffnungswinkel der Bypaßklappe (8). Bei einer Betätigung der Bypaßklappe (8) wird somit automatisch auch die Zusatzklappe (12) geöffnet, geschlossen bzw. in eine Zwischenstellung gebracht. Die Aussteuerung der Topdüse (19) bzw. Zusatzklappe (12) kann nicht nur mechanisch erfolgen, z.B. über ein Gestänge oder einen Bowdenzug, sondern auch elektrisch durch entsprechend angesteuerte Stellmotoren (Mikromotoren). Das Verhältnis der Öffnungswinkel der beiden Klappen (8) und (12) kann durch entsprechende Einrichtungen auch unproportional sein.

Die jeweiligen Stellungen der Bypaßklappe (8) und der Zusatzklappe (12) können bei einer automatischen Klappenregelung zusätzlich durch einen Sonnensensor (15) auf der Oberseite des Armaturenbretts im Bereich der Windschutzscheibe (16) beeinflußt werden, so daß im Ergebnis eine Sonneneinstrahlung in die Kabine bei der Klappenregelung immer berücksichtigt wird.

Das Verhältnis der Luftströme durch die Zentraldüse (18) und durch die Topdüse (19) wird geregelt, indem in bekannter Weise die Durchflußmenge durch die Zentraldüse (18) manuell geregelt wird.

Ersichtlich kann somit auf einfache Weise ein Heizbetrieb bei geschlossener Bypaßklappe (8) und geschlossener Zusatzklappe (12) sowie ein Klimatisierbetrieb insbesondere bei vollständig geöffneter Bypaßklappe (8) und Zusatzklappe (12) in einem Fahrerhaus eingerichtet werden.

## Patentansprüche

1. Heiz- und/oder Klimaanlage (1) für den Innenraum (2) von Kraftfahrzeugen, insbesondere für ein Nutzfahrzeug-Fahrerhaus, mit im wesentlichen vertikalen Luftausströmern (3) zum Kopf-/Scheibenbereich sowie im wesentlichen horizontalen Luftausströmern (5) zum Körper-/Kopfbereich, einem im Strömungskanal den Luftausströmern (3,5) vorgeschaltete Wärmetauscher (7) und einer dem Wärmetauscher (7) vorgeschalteten Bypass-Klappe (8), durch die Luft je nach Klappenstellung durch den Wärmetauscher (7) und/oder einen Bypass-Kanal (9) zu den Luftausströmern zu leiten ist, mit wenigstens einer im wesentlichen nach oben gerichteten Abzweigleitung (11) mit Vertikalausströmdüse(n) (19), die von wenigstens einem der im wesentlichen horizontalen Luftausströmern (5) abzweigt und eine Zusatzklappe (12) enthält, welche zwischen einer die Abzweigleitung im wesentlichen versperrenden und im wesentlichen vollständig freigebenden Stellung selbsttätig verstellbar ist, insbesondere selbsttätig verschwenkbar ist, dadurch **gekennzeichnet,** daß die Zusatzklappe (12) und die Bypass-Klappe (8) in ihren Bewegungen derart zwangsgekoppelt sind, daß die Zusatzklappe (12) proportional zum Öffnungswinkel der Bypass-Klappe (8) geöffnet wird.

2. Heiz- und/oder Klimaanlage nach Anspruch 1, dadurch **gekennzeichnet,** daß die Kopplungseinrichtung, die die Zusatzklappe (12) und die Bypass-Klappe (8) verbindet, eine mechanische, an die Klappen (8,12) über Hebel (14) angelenkte Koppel (13) ist.

3. Heiz- und/oder Klimaanlage nach Anspruch 2, dadurch **gekennzeichnet,** daß die Kopplungseinrichtung eine hilfskraftbetätigte, insbesondere elektrische oder pneumatische Verstelleinrichtung aufweist.

4. Heiz- und/oder Klimaanlage nach einem der Ansprüche 1 bis 3, dadurch **gekennzeichnet,** daß die Klappen (8,12) durch Stellmotoren, wie zum Beispiel Mikromotoren verstellbar sind, die in Abhängigkeit der Luftströmtemperatur betätigbar sind.

5. Heiz- und/oder Klimaanlage nach Anspruch 3 oder 4, dadurch **gekennzeichnet,** daß ein Sonnensensor (15) vorzugsweise im Bereich der Windschutzscheibe (16) vorgesehen ist, der in einer Steuerverbindung mit der hilfskraftbetätigten Verstelleinrichtung steht und bei Sonneneinstrahlung die Feststelleinrichtung im Sinne einer zusätzlichen Öffnung der Klappen (8,12) beeinflußt.

6. Heiz- und/oder Klimaanlage nach einem der Ansprüche 1 bis 5, dadurch **gekennzeichnet,** daß der die Abzweigleitung (11) enthaltende, im wesentlichen horizontale Luftausströmer (5) zentral im Fahrzeug angeordnet ist.

7. Heiz- und/oder Klimaanlage nach Anspruch 6, dadurch **gekennzeichnet,** daß ein die Abzweigleitung (11) enthaltender, im wesentlichen horizontaler Luftausströmer (5) eine Zentraldüse (18) mit einer manuell betätigbaren Verstell- und/oder Schließeinrichtung aufweist.

8. Heiz- und/oder Klimaanlage nach einem der Ansprüche 6 oder 7, dadurch **gekennzeichnet**, daß mehrere in Fahrzeugquerrichtung sich erstreckende, voneinander beabstandete Vertikal-Ausströmdüsen (19) in zumindest einer Abzweigleitung (11) vorgesehen sind.

## Claims

1. A heating and/or air-conditioning unit (1) for the interior (2) of motor vehicles, in particular for the cab of a commercial vehicle, with substantially vertical air outlets (3) to the head/screen region and substantially horizontal air outlets (5) to the body/head region, with a heat exchanger (7) connected upstream of the air outlets (3,5) in the flow duct, and with a by-pass flap (8) which is connected upstream of the heat exchanger (7) and through which the air, depending on the flap position, is to be directed through the heat exchanger (7) and/or a by-pass duct (9) to the air outlets, with at least one substantially upwardly directed branch duct (11) with vertical outlet nozzle(s) (19), which branches off from at least one of the substantially horizontal air outlets (5) and which includes an auxiliary flap (12) which is automatically adjustable, in particular automatically pivotable, between a position substantially closing the branch duct and a position substantially fully clearing the latter, characterised in that the auxiliary flap (12) and the by-pass flap (8) are forcibly coupled in their movements in such a way that the auxiliary flap (12) is opened proportionally to the opening angle of the by-pass flap (8).

2. A heating and/or air-conditioning unit according to Claim 1, characterised in that the coupling means, which connects the auxiliary flap (12) and the by-pass flap (8), is a mechanical coupler (13) articulated to the flaps (8,12) via levers (14).

3. A heating and/or air-conditioning unit according to Claim 2, characterised in that the coupling means has a power-assisted, in particular electrically or pneumatically adjusting means.

4. A heating and/or air-conditioning unit according to any one of Claims 1 to 3, characterised in that the flaps (8,12) are adjustable by servomotors, for example micromotors, which can be operated as a function of the air-flow temperature.

5. A heating and/or air-conditioning unit according to Claims 3 or 4, characterised in that a solar sensor (15) is provided, preferably in the vicinity of the windscreen (16), which is in control communication with the servo-assisted adjusting means and which, in the event of solar irradiation, acts on the adjusting means for the purpose of additional opening of the flaps (8,12).

6. A heating and/or air-conditioning unit according to Claims 1 to 5, characterised in that the substantially horizontal air outlet (5) including the branch duct (11) is disposed centrally in the vehicle.

7. A heating and/or air-conditioning unit according to Claim 6, characterised in that a substantially horizontal air outlet (5) including the branch duct (11) has a central nozzle (18) with a manually operatable adjusting and/or closing means.

8. A heating and/or air-conditioning unit according to either Claim 6 or 7, characterised in that a plurality of vertical outlet nozzles (19) extending in the transverse direction of the vehicle and spaced apart from one another are provided in at least one branch duct (11).

## Revendications

1. Installation de chauffage et/ou de climatisation (1) de l'habitacle (2) d'un véhicule automobile, en particulier de la cabine d'un véhicule utilitaire, comprenant :
- des sorties d'air (3) essentiellement verticales dirigées vers le haut et vers le pare-brise, ainsi que des sorties d'air (5) essentiellement horizontales dirigées vers le corps et vers le haut,
- un échangeur thermique (7) monté dans le canal alimentant les sorties d'air (3, 5) en amont de celles-ci,
- un volet de by-pass (8) monté en amont de l'échangeur (7) et qui, selon sa position, envoie l'air aux sorties (5) à travers l'échangeur (7) et/ou par un canal de by-pass (9),
- au moins une conduite de dérivation (11) dirigée essentiellement vers le haut et terminée par des sorties verticales 19), cette conduite étant branchée en dérivation au moins une des sorties d'air horizontales (5) et contenant un volet additionnel (12) qui peut être réglé automatiquement, en particulier en basculement, entre une position fermant la conduite de dérivation (11) et une position ouvrant celle-ci, installation caractérisée en ce que le clapet additionnel (12) et le clapet de by-pass (8) sont reliés impérativement de manière que le clapet additionnel (12) s'ouvre en proportion de l'angle d'ouverture du volet de by-pass (8).

2. Installation selon la revendication 1, caractérisée en ce que le dispositif d'accouplement reliant le volet additionnel (12) avec le volet de by-pass (8) est une bielle mécanique (13) articulée aux volets (8, 12) par des leviers (14).

3. Installation selon la revendication 2, caractérisée en ce que le dispositif d'accouplement comporte un dispositif de réglage actionné par une force auxiliaire, notamment un dispositif électrique ou pneumatique.

4. Installation selon l'une des revendications 1 à 3, caractérisée en ce que les volets (8, 12) sont réglables par l'action de moteurs de réglage, par exemple des micromoteurs, agissant en fonction de la température de l'air soufflé.

5. Installation selon la revendication 3 ou 4, caractérisée en ce qu'elle comporte un détecteur solaire (15) situé de préférence près du pare-brise (16) et relié au dispositif de réglage actionné par une force auxiliaire, de manière à faire agir celui-ci dans le sens d'augmentation de l'ouverture des volets (8, 12), en cas d'ensoleillement.

6. Installation selon l'une des revendications 1 à 5, caractérisée en ce que la conduite de sortie d'air (5) essentiellement horizontale, sur laquelle est montée la conduite de dérivation (11), est placée en position centrale par rapport au véhicule.

7. Installation selon la revendication 6, caractérisée en ce qu'une sortie d'air (5), essentiellement horizontale, portant la conduite de dérivation (11), est équipée d'une bouche centrale (18) munie d'un dispositif manuel de fermeture ou de réglage.

8. Installation selon la revendication 6 ou 7, caractérisée en ce que plusieurs sorties d'air (19) verticales, disposées selon la direction transversale du véhicule et espacées entre elles, sont montées sur au moins une conduite de dérivation (11).
